# EUROPEAN PATENT SPECIFICATION

(11) **EP 4 242 472 B1**
(45) Date of publication and mention of the grant of the patent: **28.01.2026**
(21) Application number: 22315050.9
(22) Date of filing: 07.03.2022
(51) Int. Cl.: F16B 2/08, F16B 37/04, F16L 3/10

(54) **NUT, FASTENING ASSEMBLY AND METHOD FOR FASTENING A LOAD**
MUTTER, BEFESTIGUNGSANORDNUNG UND VERFAHREN ZUR BEFESTIGUNG EINER LAST
ÉCROU, ENSEMBLE DE FIXATION ET PROCÉDÉ DE FIXATION D'UNE CHARGE

(43) Date of publication of application: 13.09.2023
(73) Proprietor: ALSTOM Holdings, 93400 Saint-Ouen-sur-Seine (FR)
(72) Inventor: Helali, Lounissi, 93190 Livry Gargan (FR); Acciarini, Massimo, 1410 Waterloo (BE); Demeulenaere, Ludovic, 59310 Orchies (FR)
(74) Representative: Alatis

(56) References cited:
- EP-B1- 0 928 902
- EP-B1- 1 182 368
- DE-U1- 9 112 893
- KR-A- 20110 037 349
- KR-Y1- 200 318 407
- US-A1- 2015 048 219

## Description

### TECHNICAL FIELD OF THE INVENTION

The present invention relates generally to the field of fastening devices, in particular to the field of nuts and nut assemblies.

In particular, the invention relates to a fastening assembly for fastening a load, such as a tank or a piece of auxiliary equipment, to a bracket fixed to a structural part of the car body of a rail vehicle.

### BACKGROUND ART

A number of subsystems on a rail vehicle are usually powered by a pneumatic circuit, which usually includes an air tank attached to a bracket fixed to the structure of the car body, e.g. to an underframe or a roof. Such tanks are usually cylindrical in shape and attached to their bracket by means of tightening straps. Each strap has a first end attached to the bracket, and a second end integral with a threaded rod, which passes through a through hole of the bracket and is secured by a nut. The nut is screwed with a tool such as a spanner or a wrench in order to tighten the strap around the tank and lock the tank to the bracket. However, in some circumstances, the structure does not allow easy access to the nut on a side of the bracket opposed to the strap, an tightening may be difficult or impossible.

To maintain safety standards in these circumstances and allow the application of a torque, it is thus common to use more complex fastening means to attach the transported loads to the bracket. These assemblies include numerous parts, therefore, are harder to manufacture, more expensive and heavier for the structure. An example of a fastening assembly of the prior art is shown in KR 20110037349A.

### SUMMARY OF THE INVENTION

The invention aims to allow easier fastening of a load to a bracket in bulked areas with simple means. More specifically, the invention aims to provide a nut and its assembly including the minimum number of parts, in which a torque can be applied by a tool to screw or unscrew said nut in bulked areas.

According to a first aspect of the invention, there is provided a fastening assembly as defined in claim 1.

Such an assembly includes the minimum number of parts and allows a tool to screw or unscrew easily the nut, even in bulked areas in which the first face is not easily accessible. In particular, it becomes possible insert the nut through a through hole in a wall of a bracket, until the flange bears against one side of the wall while the head protrudes from the other side of the wall and remains accessible with a tool.

Preferably, the head protrudes radially relative to the cylindrical wall. When the nut is engaged into an oblong through hole of the bracket in a first predetermined angular position, the head of the nut does not interfere with the edges of the through hole. When turned in another predetermined position, the head interferes with the edges of the oblong through hole and the nut is loosely axially held.

In a preferred embodiment, the head has a square, hexagonal or octagonal cross-section, all of which are compatible with a bracket provided with an oblong through hole.

According to a non-limiting embodiment, the through hole of the nut has a non-threaded portion, which has an inner diameter equal to or greater than a minor diameter of the threaded portion. Alternatively, the threaded portion extends from one open end of the through hole to another. Such a threaded portion allows a better stress distribution of the stress generated by a threaded rod integral with the nut.

Preferably, the shoulder is flat to minimise wear.

In one embodiment, a washer is inserted between the first face of the bracket and the shoulder of the nut.

In accordance with another aspect of the present invention, there is provided a method for fastening a load to a bracket by means of at least one strap wrapped around the load, as defined in claim 7.

The method may further include the operation of adjusting the angular position of the nut to prevent or limit an axial translation of the nut.

According to a non-limiting embodiment, the load has a cylindrical wall and the strap at least partially surrounds the cylindrical wall.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is afront view of a tank fastened to a bracket of a rail-bound vehicle;
- figure 2 is a vertical cross-section view of a region Z1 of figure 1, showing an assembly for fastening a load to a bracket according to an embodiment of the invention;
- figure 3a is a bottom view of an assembly for fastening a load to a bracket with the initial angular position of a nut and a screw inserted through a through hole of a bracket;
- figure 3b is a bottom view of the assembly of figure 4a after the nut has been turned.

The same reference signs will be used in the figures for identifying identical parts of the same embodiments or similar part in different embodiments.

### DETAILED DESCRIPTION OF PREFERRED EMBODIMENTS

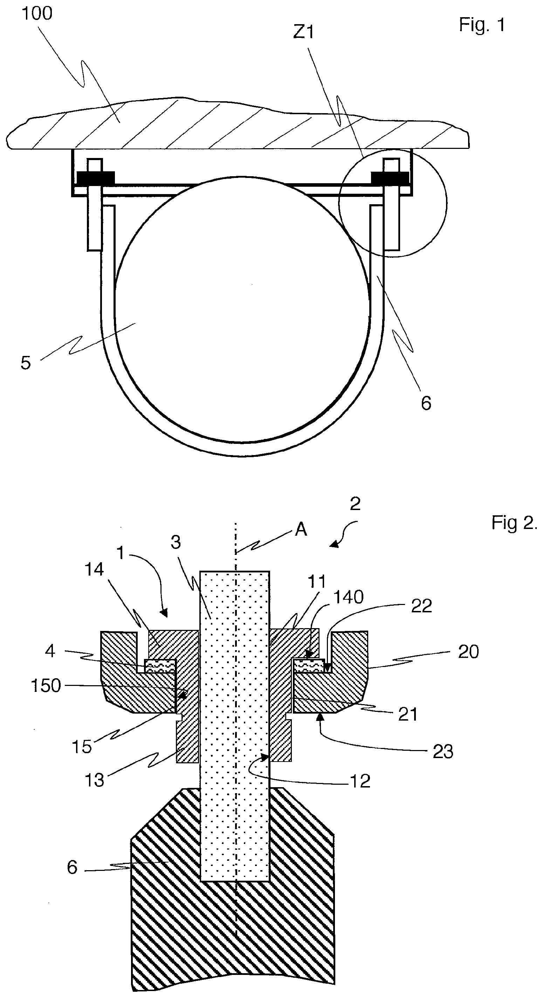

Figure 1 illustrates a region of a car body **100** of a vehicle, for example, a rail-bound vehicle, transporting a load **5.** The load **5** preferably has a cylindrical wall, yet any shape adapted to the storage of compressed air or fluids used by pneumatic subsystems is relevant.

The load **5** is fastened to a bracket **20** by the means of at least one strap **6.** The bracket **20** is a structural element fixed to or integral with an underframe of the car body **100.** A first end of the strap **6** is each attached directly to the bracket **20,** the other end of each strap **6** is each attached to the bracket **20** and tightened by the means of an associated assembly **2.** The strap **6** is formed by an elastically deformable material, such as a chromium-nickel stainless steel alloy. Alternatively, both ends of each strap 6 can be attached to the bracket **20** by similar assemblies **2.** If necessary, two or more similar straps **6** can be used in parallel to fasten the load 5 to one or more brackets **20** fixed to the car body **100.**

In figure 2 is illustrated a vertical cross-section view of a region **Z1** of figure 1. The bracket **20** preferably has a U-shaped section, yet any other section preventing the bending of the bracket **20** due to the load **5** is relevant. The assembly **2** attaching the strap **6** to the bracket **20** includes a threaded rod **3,** a nut **1.** A first end of the threaded rod **3** is integral with the strap **6.**

The bracket **20** has a through hole **21** with an overall circular or preferably oblong section. The through hole **21** opens out on a first face **22** and a second face **23** of a wall of the bracket **20.** The threaded rod **3** is engaged through the through hole **21,** so that a free end of the threaded rod **3** protrudes from the first face **22,** while the second face **23** faces the strap **6.**

The threaded rod **3** is engaged with a threaded portion **12** of the nut **1** through a through hole **11** of the nut **1,** which defines a reference axis **A.** The nut **1** comprises a head **13,** a flange **14,** and an intermediate portion **15** extending axially along the reference axis **A** between the head **13** and the flange **14.** The threaded portion **12** of the nut preferably extends from one open end of the through hole 11 to another.

The head **13** has a polygonal cross-section, for example a hexagonal cross-section, yet any other cross-section suitable for engagement of a screwing tool such as a spanner is relevant. The intermediate portion **15** has a cylindrical wall **150.** The flange **14** protrudes radially relative to the cylindrical wall **150** and to the head **13** so as to define a shoulder **140** facing an axial direction towards the head **13.**

To tighten the strap **6** around the cylindrical wall of the tank **5,** a torque is applied to screw the nut **1,** for example with a spanner. The nut **1** remains axially stationary and rotate around the reference axis **A,** resulting in an axial movement of the threaded rod **3** following the reference axis **A.** This operation can naturally be reverted by applying an opposite torque to the head **13** of the nut.

To enhance the durability of the assembly, the first face **22** of the bracket **20,** the shoulder **140** is preferably flat. The assembly **2** can be provided with a washer **4** loosely mounted on the intermediate portion **15** of the nut **1** between the first face **22** of the bracket **20** and the shoulder **140** of the nut **1.**

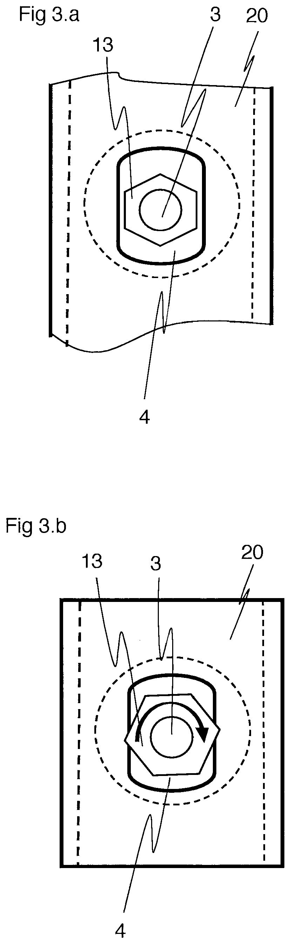

The head **13** preferably protrudes radially relative to the cylindrical wall **150.** Figure 3a illustrates the nut **1** in an initial angular position such that the head **13** can be engaged or passed through the through hole **21** by an axial movement along the reference axis **A.** In Figure 3b, the head **13** of the nut **1** has been turned to a second angular position, such as to have an interference with the edges of the through hole **21.** In this position, the nut **1** cannot escape from the through hole **21.**

While the invention has been described in the context of the fastening of a tank to a car body of a rail vehicle, the nut can be used as fastening device of general purpose.

## Claims

1. A fastening assembly (2) comprising a bracket (20) provided with a through hole (21) opening out on a first face (22) and a second face (23) of the bracket (23), a threaded rod (3) and a nut (1) provided with a through hole (11) defining a reference axis (A), the through hole (11) of the nut (1) having a threaded portion (12) engaged with the threaded rod (3), the nut (1) comprising: a head (13) which protrudes from the second face (23) of the through hole of the bracket (20), a flange (14), and an intermediate portion (15) extending axially between the head (13) and the flange (14) through the through hole (21) of the bracket, the intermediate portion (15) having a cylindrical wall (150), wherein the flange (14) protrudes radially relative to the cylindrical wall (150) and to the head (13) so as to define a shoulder (140) which faces an axial direction towards the head (13) and bears against the first face (22) of the bracket (20), **characterised in that** the head (13) has a polygonal cross-section.

2. The assembly (2) of claim 1, wherein the head (13) protrudes radially relative to the cylindrical wall (150).

3. The assembly (2) of any one of the preceding claims, wherein the through hole (11) of the nut (1) has a non-threaded portion (121), which has an inner diameter equal to or greater than a minor diameter of the threaded portion (12).

4. The assembly (2) of any one of claims 1 to 2, wherein the threaded portion (12) extends from one open end of the through hole (11) to another.

5. The assembly (2) of any one of the preceding claims, wherein the shoulder (140) is flat.

6. The assembly (2) of any one of the preceding claims, further comprising a washer (4) mounted on the intermediate portion (15) of the nut (1) between the first face (22) of the bracket (20) and the shoulder (140) of the nut (1).

7. A method for fastening a load (5) to a bracket (20) by means of at least one strap wrapped around the load, the bracket (20) having a through hole (21) opening out on a first face (22) and a second face (23) of the bracket (20), wherein
- a first end of a strap (6) is attached to the bracket (20),
- a nut (1), comprising a head (13), a flange (14) and an intermediate portion (15) having a cylindrical wall (150), is engaged in the through hole (21) of the bracket (20) such that the
flange (14) of the nut (1), which protrudes radially relative to the cylindrical wall (150) and to the head (13) so as to define a shoulder (140) which faces an axial direction towards the head (13), bears against the first face (22), the
intermediate portion (15) of the nut (1), which extends axially between the head
(13) of the nut (1) and the flange (14) of the nut (1), passes through the through hole (21) of the bracket and the head (13) of the nut (1), which has a polygonal cross-section, protrudes from the second face (23) of the through hole (21) of the bracket (20), the nut (1) being provided with a through hole (11) defining a reference axis (A), the through hole (11) of the nut (1) having a threaded portion (12), and
- a threaded rod (3) integral with a second end of the strap is engaged with the threaded portion (12) of the nut (1) and a screwing tool is engaged with the head (13) of the nut (1) to apply torque to the nut (1), rotate the nut (1) around the reference axis (A) while the nut (1) remains axially stationary, resulting in an axial movement of the threaded rod (3) along the reference axis (3) such that the threaded rod (3) passes through the through hole (21) of the bracket (20) and a free end of the threaded rod (3) protrudes from the first face (22) and the second face (23) faces the strap (6), whereby the strap (6) is tightened.

8. The method of claim 7, wherein the load has a cylindrical wall and the strap at least partly surrounds the cylindrical wall.

## Patentansprüche

1. Befestigungsanordnung (2), umfassend eine Halterung (20), die mit einem Durchgangsloch (21) versehen ist, das auf einer ersten Fläche (22) und einer zweiten Fläche (23) der Halterung (23) mündet, eine gewindete Stange (3) und eine Mutter (1), die mit einem Durchgangsloch (11) versehen ist, das eine Referenzachse (A) definiert, wobei das Durchgangsloch (11) der Mutter (1) einen gewindeten Abschnitt (12) aufweist, der mit der gewindeten Stange (3) in Eingriff steht, die Mutter (1) umfassend: einen Kopf (13), der von der zweiten Fläche (23) des Durchgangslochs der Halterung (20) vorsteht, einen Flansch (14), und einen Zwischenabschnitt (15), der sich axial zwischen dem Kopf (13) und dem Flansch (14) durch das Durchgangsloch (21) der Halterung erstreckt, wobei der Zwischenabschnitt (15) eine zylindrische Wand (150) aufweist, wobei der Flansch (14) radial relativ zu der zylindrischen Wand (150) und zu dem Kopf (13) vorsteht, um eine Schulter (140) zu definieren, die einer axialen Richtung zu dem Kopf (13) hin zugewandt ist und an der ersten Fläche (22) der Halterung (20) anliegt, **dadurch gekennzeichnet, dass** der Kopf (13) einen polygonalen Querschnitt aufweist.

2. Anordnung (2) nach Anspruch 1, wobei der Kopf (13) radial relativ zu der zylindrischen Wand (150) vorsteht.

3. Anordnung (2) nach einem der vorstehenden Ansprüche, wobei die Durchgangsbohrung (11) der Mutter (1) einen nicht-gewindeten Abschnitt (121) aufweist, der einen Innendurchmesser gleich oder größer als ein Kerndurchmesser des gewindeten Abschnitts (12) aufweist.

4. Anordnung (2) nach einem der Ansprüche 1 bis 2, wobei sich der gewindete Abschnitt (12) von einem offenen Ende der Durchgangsbohrung (11) zu einem anderen erstreckt.

5. Anordnung (2) nach einem der vorstehenden Ansprüche, wobei die Schulter (140) flach ist.

6. Anordnung (2) nach einem der vorstehenden Ansprüche, ferner umfassend eine Unterlegscheibe (4), die auf dem Zwischenabschnitt (15) der Mutter (1) zwischen der ersten Fläche (22) der Halterung (20) und der Schulter (140) der Mutter (1) angebracht ist.

7. Verfahren zum Befestigen einer Last (5) an einer Halterung (20) mittels mindestens eines um die Last gewickelten Gurts, wobei die Halterung (20) eine Durchgangsbohrung (21) aufweist, die auf einer ersten Fläche (22) und einer zweiten Fläche (23) der Halterung (20) mündet, wobei
- ein erstes Ende eines Gurts (6) an der Halterung (20) befestigt ist,
- eine Mutter (1), die einen Kopf (13), einen Flansch (14) und einen Zwischenabschnitt (15), der eine zylindrische Wand (150) aufweist, umfasst, mit dem Durchgangsloch (21) der Halterung (20) in Eingriff steht, sodass der Flansch (14) der Mutter (1), der radial relativ zu der zylindrischen Wand (150) und zu dem Kopf (13) vorsteht, um eine Schulter (140) zu definieren, die einer axialen Richtung zum Kopf (13) hin zugewandt ist, an der ersten Fläche (22) anliegt, wobei der Zwischenabschnitt (15) der Mutter (1), der sich axial zwischen dem Kopf (13) der Mutter (1) und dem Flansch (14) der Mutter (1) erstreckt, durch das Durchgangsloch (21) der Halterung hindurchgeht und der Kopf (13) der Mutter (1), der einen polygonalen Querschnitt aufweist, von der zweiten Fläche (23) des Durchgangslochs (21) der Halterung (20) vorsteht, wobei die Mutter (1) mit einem Durchgangsloch (11) versehen ist, das eine Referenzachse (A) definiert, wobei das Durchgangsloch (11) der Mutter (1) einen gewindeten Abschnitt (12) aufweist, und
- eine gewindete Stange (3), die einstückig mit einem zweiten Ende des Gurts ist, steht mit dem gewindeten Abschnitt (12) der Mutter (1) in Eingriff und ein Schraubwerkzeug steht mit dem Kopf (13) der Mutter (1) in Eingriff, um Drehmoment auf die Mutter (1) aufzubringen, die Mutter (1) um die Referenzachse (A) zu drehen, während die Mutter (1) axial stationär bleibt, was zu einer axialen Bewegung der gewindeten Stange (3) entlang der Referenzachse (3) führt, sodass die gewindete Stange (3) durch das Durchgangsloch (21) der Halterung (20) hindurchgeht und ein freies Ende der gewindeten Stange (3) von der ersten Fläche (22) vorsteht und die zweite Fläche (23) dem Gurt (6) zugewandt ist, wodurch der Gurt (6) gespannt wird.

8. Verfahren nach Anspruch 7, wobei die Last eine zylindrische Wand aufweist und der Gurt die zylindrische Wand mindestens teilweise umgibt.

## Revendications

1. Ensemble de fixation (2) comprenant un support (20) pourvu d'un trou traversant (21) débouchant sur une première face (22) et une seconde face (23) du support (23), une tige filetée (3) et un écrou (1) pourvu d'un trou traversant (11) définissant un axe de référence (A), le trou traversant (11) de l'écrou (1) ayant une partie filetée (12) en prise avec la tige filetée (3), l'écrou (1) comprenant : une tête (13) qui fait saillie de la seconde face (23) du trou traversant du support (20), une bride (14), et une partie intermédiaire (15) s'étendant axialement entre la tête (13) et la bride (14) à travers le trou traversant (21) du support, la partie intermédiaire (15) ayant une paroi cylindrique (150), dans lequel la bride (14) fait saillie radialement par rapport à la paroi cylindrique (150) et à la tête (13) de manière à définir un épaulement (140) qui fait face à une direction axiale vers la tête (13) et s'appuie contre la première face (22) du support (20), **caractérisé en ce que** la tête (13) a une section transversale polygonale.

2. Ensemble (2) selon la revendication 1, dans lequel la tête (13) fait saillie radialement par rapport à la paroi cylindrique (150).

3. Ensemble (2) selon l'une quelconque des revendications précédentes, dans lequel le trou traversant (11) de l'écrou (1) a une partie non filetée (121), qui a un diamètre intérieur égal ou supérieur à un petit diamètre de la partie filetée (12).

4. Ensemble (2) selon l'une quelconque des revendications 1 à 2, dans lequel la partie filetée (12) s'étend d'une extrémité ouverte du trou traversant (11) à l'autre.

5. Ensemble (2) selon l'une quelconque des revendications précédentes, dans lequel l'épaulement (140) est plat.

6. Ensemble (2) selon l'une quelconque des revendications précédentes, comprenant en outre une rondelle (4) montée sur la partie intermédiaire (15) de l'écrou (1) entre la première face (22) du support (20) et l'épaulement (140) de l'écrou (1).

7. Procédé de fixation d'une charge (5) à un support (20) au moyen d'au moins une sangle enroulée autour de la charge, le support (20) ayant un trou traversant (21) débouchant sur une première face (22) et une seconde face (23) du support (20), dans lequel
- une première extrémité d'une sangle (6) est attachée au support (20),
- un écrou (1), comprenant une tête (13), une bride (14) et une partie intermédiaire (15) ayant une paroi cylindrique (150), est en prise avec le trou traversant (21) du support (20) de telle sorte que la bride (14) de l'écrou (1), qui fait saillie radialement par rapport à la paroi cylindrique (150) et à la tête (13) de manière à définir un épaulement (140) qui est orienté vers une direction axiale vers la tête (13), s'appuie contre la première face (22), la partie intermédiaire (15) de l'écrou (1), qui s'étend axialement entre la tête (13) de l'écrou (1) et la bride (14) de l'écrou (1), traverse le trou traversant (21) du support et la tête (13) de l'écrou (1), qui a une section transversale polygonale, fait saillie de la seconde face (23) du trou traversant (21) du support (20), l'écrou (1) étant pourvu d'un trou traversant (11) définissant un axe de référence (A), le trou traversant (11) de l'écrou (1) ayant une partie filetée (12), et
- une tige filetée (3) solidaire d'une seconde extrémité de la sangle est en prise avec la partie filetée (12) de l'écrou (1) et un outil de vissage est en prise avec la tête (13) de l'écrou (1) pour appliquer un couple à l'écrou (1), faire tourner l'écrou (1) autour de l'axe de référence (A) tandis que l'écrou (1) reste axialement stationnaire, entraînant un mouvement axial de la tige filetée (3) le long de l'axe de référence (3), de telle sorte que la tige filetée (3) traverse le trou traversant (21) du support (20) et une extrémité libre de la tige filetée (3) fait saillie de la première face (22) et la seconde face (23) est orientée vers la sangle (6), ce qui permet de serrer la sangle (6).

8. Procédé selon la revendication 7, dans lequel la charge a une paroi cylindrique et la sangle entoure au moins partiellement la paroi cylindrique.
